# EUROPÄISCHE PATENTSCHRIFT

(11) **EP 1 366 316 B1**
(45) Veröffentlichungstag und Bekanntmachung des Hinweises auf die Patenterteilung: **04.08.2004**
(21) Anmeldenummer: 01929395.0
(22) Anmeldetag: 03.03.2001
(51) Int. Cl.: F16K 31/04, F16K 1/22

(54) **MOTORISCH BETÄTIGBARE KLAPPE**
MOTOR DRIVEN VALVE
CLAPET ACTIONNE PAR UN MOTEUR

(43) Veröffentlichungstag der Anmeldung: 03.12.2003
(73) Patentinhaber: Oechsler Aktiengesellschaft, 91522 Ansbach (DE)
(72) Erfinder: POEHLAU, Frank, 90762 Fuerth (DE)
(86) Internationale Anmeldenummer: PCT/EP2001/002404
(87) Internationale Veröffentlichungsnummer: WO 2002/070935

(56) Entgegenhaltungen:
- DE-A- 4 223 933
- DE-A- 4 228 485
- GB-A- 1 013 649
- US-A- 3 777 974
- US-A- 5 687 691

## Beschreibung

Die Erfindung betrifft eine Klappe gemäß dem Oberbegriff des Anspruches 1.

Eine derartige Klappe ist aus der DE 42 23 933 A1 als Drosselvorrichtung einer Brennkraftmaschine bekannt, wobei ein elektrischer Stellmotor für die Drosselklappe nicht mehr außerhalb des Drosselkanales, sondern zwecks Kühlung nun im von der momentanen Klappenstellung bestimmten Ansaugluftstrom durch den Drosselkanal selbst liegt. Die dadurch von der Klappenstellung abhängige Kühlwirkung bedingt allerdings, daß der Motor doch wieder auf minimale Konvektionskühlung und deshalb mit voluminösen Wärmetauscherflächen ausgelegt werden muß, was den nutzbaren Maximalquerschnitt des Drosselkanales empfindlich einschränkt.

Oft müssen für die Klappenverstellung und dann für das Halten der Klappe in ihrer Sollwinkelstellung unter der Last des im Kanal anströmenden Mediums erhebliche Drehmomente aufgebracht werden; während ein Einbau eines entsprechend stark dimensionierten Stellmotors ins Innere des Kanales dessen nutzbaren Querschnitt wieder untragbar verringern würde. Deshalb ragt für gewöhnlich eine mit der Klappe drehstarr verbundene, in einander quer zur Längserstreckung gegenüberliegenden Seitenwänden des Kanales gelagerte Stellwelle aus einer der Seitenwände zu einem außerhalb des Kanales montierten Stellmotor für die Klappenbewegung hinaus. Andererseits kann ein extern angeordneter und dort den Außenquerschnitt des Kanales deutlich überragender Klappenantrieb störend für die Betriebsumgebung sein, insbesondere bei eng dimensionierten Anlagen. Zum insbesondere nachträglichen Einbau einer solchen Drosselklappe an einer betriebstechnisch vorgegeben Stelle eines komplexen Rohrleitungssystems wie in den Motorraum eines Kraftfahrzeuges zur Regulierung der Klimatisierung der Fahrgastzelle steht sogar oft der Raum für einen außerhalb des Kanales gelegenen Klappenantrieb nicht ohne weiteres zur Verfugung. Das kann dann bedingen, daß ein aufwendiges aber anderweitig funktional störendes Hebelgetriebe den Abstand vom Motor zur Klappenlagerung überbrücken muß.

Motorisch bewegbare Klappen finden je nach ihren Abmessungen insbesondere in Zu- und Abluftkanälen etwa zur Frischluftdrosselung bei der Klimatisierung stationärer oder mobiler Räume Anwendung, aber auch allgemein zur Durchflußbeeinflussung beim Strömungstransport fließfähiger Güter. Dafür ist die jeweilige Klappe im Innenquerschnitt des Kanales um eine Schwenkachse gelagert und in unterschiedliche Winkelstellungen bezüglich der Strömungsrichtung anstellbar. Parallel zur Strömungsrichtung orientiert ist die Drosselwirkung minimal, nur durch die Einbauabmessungen der Klappe gegeben. Quer zur Strömungsrichtung orientiert verbleibt dagegen der geringste freie Restquerschnitt.

Gewöhnlich weist die Geometrie der Klappe genau die Querschnittsform des Kanales und je nach dem Strömungsmedium erforderlichenfalls Dichtlippen längs ihres Umfangs auf, so daß bei quer zur Längserstreckung des Kanales ausgerichteter Klappe dessen ganzer Innenquerschnitt hermetisch abgesperrt ist. Der Klappenantrieb erfolgt üblicherweise über einen elektrischen Stellmotor, in explosionsgefährdeter Umgebung aber auch durch einen hydraulischen oder pneumatischen Fluidmotor.

Der Erfindung liegt nun die Aufgabe zugrunde, eine motorisch betriebene Klappe gattungsgemäßer Art insbesondere für Fluidleitungssysteme, wie sie in Kfz-Klimaanlagen anzutreffen sind, dahingehend auszubilden, daß sie samt ihrem Antrieb problemlos, nämlich insbesondere ohne unzumutbare Querschnittsbeeinträchtigung und auch nachträglich einsetzbar ist.

Diese Aufgabe ist erfindungsgemäß dadurch gelöst, daß die gattungsgemäße Klappe auch gemäß dem Kennzeichnungsteil des Hauptanspruches ausgelegt ist. Danach wird ein untersetzender Getriebemotor ins Innere der Hohlwelle der Klappe eingesetzt.

Dessen sehr starke getriebliche Untersetzung ermöglicht die Verwendung eines sehr hochtourigen und deshalb kleinbauenden Motors, wie er etwa als Kleinspannungs-Gleichstromstellmotor als sehr preisgünstiges Massenprodukt verfügbar ist. Das Getriebe kann trotz der außerordentlich hohen Untersetzung extrem kleinbauend ausgelegt werden, wenn es als ein sogenanntes Wellgetriebe konzipiert wird, wie es funktional etwa in dem Beitrag "Genial einfach" von H. Him in ANTRIEBSTECHNIK 11/1996 Seiten 48-51 beschrieben ist, auf den hier zur Ergänzung vorliegender Erfindungsoffenbarung voll-inhaltlich Bezug genommen wird.

Vorzugsweise wird der handelsübliche Kleinstmotor axial in ein dünnwandig topfförmiges Einbaugehäuse eingesenkt, das seinerseits gegenüberliegend von der Klappen-Hohlwelle übergriffen wird. Das in axialer Verlängerung des Motors in der Hohlwelle angeordnete koaxiale Getriebe nutzt einen axial über den Boden des Einbaugehäuses hinausragenden Wandungsteil als Stützrad und einen dazu axial benachbarten Teil der Hohlwelle selbst als Abtriebsrad für das Stößelrad des Wellgetriebes und ist dadurch besonders kompakt aufgebaut.

Der Durchmesser einer solchen kleinbauenden Motor-Getriebe-Kombination beträgt höchstens ein Drittel des Durchmessers üblicherweise in der Kfz-Klimatisierung anzutreffender Lüftungskanäle, und die axiale Länge der Motor-Getriebe-Kombination liegt in der Größenordnung von typisch dem halben Kanaldurchmesser, so daß die beim Einbau des Stellantriebs ins Innere selbst eines Kanales vergleichsweise kleinen Durchmessers auftretende Querschnittsverringerung vertretbar wird. Je dünner der abzusperrende Kanal ist, desto weiter greift der Getriebemotor standardisierter Baulänge radial in den Kanal hinein; bei sehr kleinem Kanal ist der Getriebemotor dann in einer durchgehenden Hohlwelle als der Klappen-Stellwelle angeordnet, ohne daß die Querschnittsverringerung untragbar würde - bei größeren Kanälen wie von gängigen 120x120 mm Innenabmessungen fällt die dann nur über einen entsprechend kurzen Teil ihrer Achslänge tulpenförmig aufgeweitete Klappen-Welle ohnehin nicht mehr ins Gewicht.

Der Motor kann als Stabanker-Gleichstrommotor ausgelegt sein, aber auch als Schrittmotor. Das kleinvolumige Einbaugehäuse mit seinen integrierten Funktionen als Lagerzapfen für das topfförmig aufgeweitete Ende der Stellwelle, als Gehäuse mit gerätefestem Stützrad für das Well-Getriebe und eventuell auch noch als Substrat für elektrische Leiter wie Potentiometer-Schleifbahnen und deren Anschlußleiterbahnen ist vorteilhaft ein Kunststoff-Spritzgußteil, etwa aus einem Duroplast gefertigt.

Eine einfach montierbare motorisch verstellbare Drosselklappe für Fluidkanäle, wie sie insbesondere in der Kraftfahrzeugklimatisierung anzutreffen sind, ergibt sich so bei erfindungsgemäß in die Klappen-Stellwelle integriertem Getriebemotor ohne unvertretbare Schwächung des verbleibenden lichten Kanalquerschnittes, wenn ein mit einem hochtourigen kleinen Stellmotor bestücktes Einbau-Gehäuse in axialer Verlängerung des Motorraumes mit einem sehr stark untersetzenden Wellgetriebe ausgestattet und in eine hohle Klappen-Stellwelle eingesetzt ist, an deren Innenmantelfläche das Abtriebsrad des Wellgetriebes ausgebildet ist.

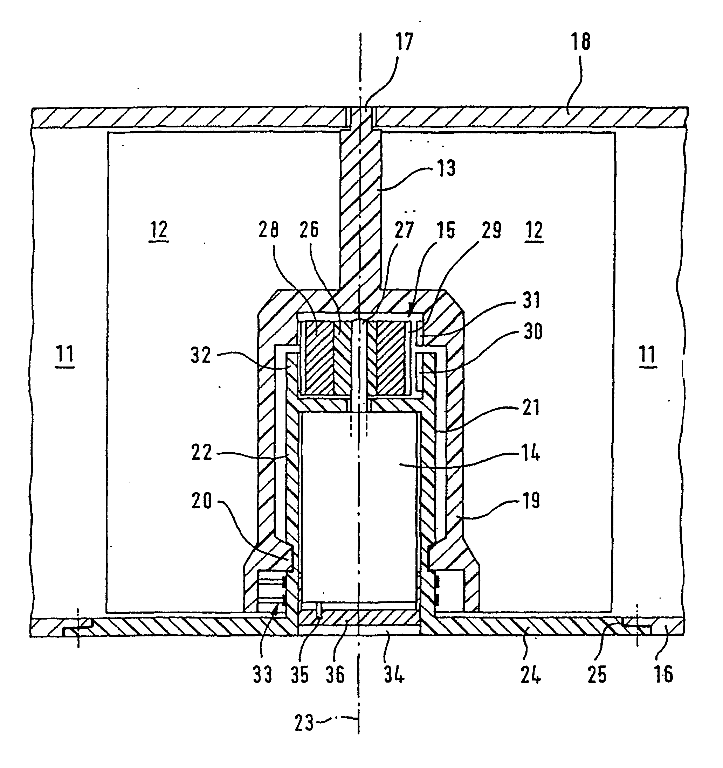

Hinsichtlich weiterer Eigenschaften und Vorteile sowie Merkmale und Weiterbildungen der Erfindung wird außer auf die weiteren Ansprüche auch auf nachstehende Beschreibung des in der Zeichnung nicht ganz maßstabsgerecht und unter Beschränkung auf das Funktionswesentliche skizzierten bevorzugten Realisierugsbeispiels zur erfindungsgemäßen Lösung verwiesen. Die einzige Figur der Zeichnung zeigt im abgebrochenen Längsschnitt durch einen Lüftungskanal rechteckigen Innenquerschnittes den Einbau des Stellmotors in die teilweise hohle Welle der gerade in Durchgangsstellung orientierten Drosselklappe.

In einen Fluid-Kanal 11 von hier rechteckigem Querschnitt ist eine Drossel-Klappe 12 eingebaut, deren Umriß die gleiche Geometrie wie der Kanalquerschnitt aufweist und deshalb den Kanal-Durchfluß sperrt, wenn sie quer zur Zeichenebene orientiert ist. In der gezeichneten Stellung parallel zur Längsachse des Kanales 11 dagegen ist dessen Querschnitt nur noch durch die vergleichsweise sehr geringen Einbauabmessungen der Klappe 12 samt ihres in deren Hohl-Welle 13 integrierten Stell-Motors 14 mit Untersetzungs-Getriebe 15 reduziert.

Im dargestellten bevorzugten Beispielsfall weist die Klappe 12 beiderseits ihrer Welle 13 je einen Flügel in einer gemeinsamen Ebene auf. Beide Flügel der Klappe 12 sind mit ihrer gemeinsamen Welle 13 einstückig ausgebildet, vorzugsweise einteilig im Kunststoff-Spritzguß erstellt. In dem Maße, in dem die axiale Länge des Getriebemotors 14-15 kleiner als der Durchmesser des Kanales 11 in Richtung der Klappen-Stellwelle 13 ist, braucht die Welle 13 nicht über ihre gesamte Länge das Volumen einer Hohlwelle einzunehmen. Für den dargestellten Beispielsfall ist die Welle 13 zur Verringerung der Einbauabmessungen im Längsschnitt tulpenförmig mit mehr oder weniger langem Stiel in Fortsetzung ihrer hohlzylindrischen Öffnung ausgestaltet - also nur über einen Teil der Wellen-Länge, wie aus der Schnittdarstellung der Zeichnung ersichtlich, zur benachbarten Seitenwand 16 sich topfförmig öffnend hohl und im übrigen kompakt, hier auf den durch die Biegemomenten-Anforderungen bedingten minimalen Querschnitt beschränkt.

Diese abgestufte oder durchlaufend hohle Schwenk-Welle 13 für die Winkelstellung der Klappe 12 im Innem des Kanales 11 ist einerseits mit einem Zapfen 17 in einer Seitenwand 18 des Kanales 11 gelagert. Von der gegenüberliegenden Seitenwand 16 her ragt ein langes topfförmiges Einbaugehäuse 22 für den Getriebemotor 14-15 radial ins Innere des Kanales 11 hinein und dient als kanalfester Lagerzapfen für das ihn umgreifende benachbarte, hier hohlzylindrisch oder topfförmig radial aufgeweitete Ende der Welle 13. Zur Verringerung der Reibung liegt der Wellen-Topf 19 nicht vollflächig sondern nur mit wenigstens einer an seiner Innenmantelfläche oder an der Außenmantelfläche des Gehäuses 22 umlaufenden Rippe 20 an der jeweils radial gegenüberliegenden Zylindermantelfläche auf. So ist die Klappe 11 mit ihrer Hohl-Welle 13 auf dem Einbaugehäuse 22 für den Getriebemotor 14-15 um dessen Achse 23 verschwenkbar gelagert. Der Motor 14 selbst ist einfach in das zur benachbarten Seitenwand 16 hin offene Stimende des Einbaugehäuses 22, kraft oder formschlüssig gegen Verdrehen gesichert, axial eingesetzt. Ein um die Einbau-Öffnung 34 außen radial umlaufender Kragen 24 wird beim Einbau des mit dem Getriebemotor 14-15 bestückten Einbaugehäuses 22 in einer Öffnung 25 in der Kanal-Seitenwand 16 befestigt, durch die hindurch bei der Montage die so mit ihrem Antrieb ausgestattete Klappe 12 in den Kanal 11 radial eingeführt werden kann. Zweckmäßigerweise ist der Kragen 24 wie skizziert in radialer Richtung so weit über den Querschnitt des Einbau-Gehäuses 22 hinaus vergrößert, daß er mit der Einbauhalterung des Getriebemotors 14-15 zugleich auch als Deckel dem Verschließen der nicht unbedingt kreisrunden Montage-Öffnung 25 dient, deren größter Durchmesser etwas größer als die zur Welle 13 radiale Gesamtabmessung der hier einzuführenden Klappe 12 ist.

Vor dem von der Halterungs-Wand 16 für den Getriebemotor 14-15 abgelegenen Stirnende des Einbau-Gehäuses 22 ist zur besonders starken aber kompaktbauenden Untersetzung der Drehbewegung der Motor-Ausgangswelle 27 ein Well-Getriebe 15 ausgebildet. Sein unrunder (in Axial-Querschnitt bevorzugt elliptischer oder wie hier für die Zeichnung angenommen dreieckförmiger) sogenannter Wellgenerator 26, der mit der Abtriebswelle 27 des Motors 14 in Drehverbindung steht, bewirkt in als solcher bekannter Weise, daß ein Speichen-Stößelrad 28 umlaufend radial verformt wird, so daß nur ein azimutal kurzer Bereich (in der Zeichnung links) dessen verzahnten Außenringes, des sog. Flexbandes 29, sowohl mit der Verzahnung eines gerätefesten Stützrades-30 wie auch mit der Verzahnung eines klappenfesten Abtriebsrades 31 in Eingriff steht. Diese Verzahnungen sind vorzugsweise wie skizziert radial orientiert; grundsätzlich können sie aber auch etwa nach Art von Kronrädern axial orientiert sein.

Das Stützrad 30 liegt vorzugsweise wie skizziert in direkter axialer Verlängerung der Hohlzylinderwandung des Motor-Einbaugehäuses 22 an der Innenmantelfläche eines hier koaxial angeformten Getriebegehäuses 32, das Abtriebsrad 31 am dem Boden des Klappenwellen-Topfes 19 benachbarten Bereich der Innenmantelfläche der Hohl-Welle 13. Dadurch wälzt das Stößelrad 28 sich mit der Winkelgeschwindigkeit der Motorwelle 27 innerhalb des Stützrades 30 ab, nimmt aber das Abtriebsrad 31 und somit die Klappen-Welle 13 nur mit der sehr stark reduzierten Winkelgeschwindigkeit nach Maßgabe des geringen Unterschiedes der Zähnezahl z.B. zwischen Stützrad 30 und Abtriebsrad 31 mit. So wird eine hochtourige Motordrehung in das hohe Drehmoment einer langsamen Klappenverstellung umgesetzt.

Für eine Rückmeldung der aktuellen Winkelstellung der Klappe 12 im Kanal 11 ist zwischen der Außenmantelfläche 21 des Motor-Gehäuses 22 und dem Wellen-Topf 19 nahe dessen stirnseitiger Öffnung in einem radial aufgeweiteten Bereich ein Dreh-Winkelgeber 33 eingebaut. Bei dem kann es sich um ein inkrementales oder kodiertes digitales Zählsystem handeln; oder einfach wie skizziert um ein analoges potentiometrisches System mit wenigstens einer Kontaktbürste auf wenigstens einem umlaufenden Widerstandsbahn. Letztere, einschließlich ihrer Leiterbahn zu extern zugänglichen Anschlußsteckern am Kragen 24 des Einbaugehäuses 22, kann dann (in der Zeichnung nicht ausgeführt) in der Technologie des sogenannten Molded Interconnected Device (MID) in die Kunststoff-Mantelfläche 21 des Gehäuses 22 oder des auf ihr gelagerten Wellen-Topfes 19 integriert sein. Zweckmäßiger da z.B. einfacher für einen eventuell einmal erforderlichen Austausch zugänglich ist jedoch eine herkömmliche Lösung mit einer gesondert erstellten und hier montierten Substratplatte für die Zählmarkierungen oder für die Widerstandsbahnen. Dieses Substrat kann als radial zur Achse 23 orientierte Ringscheibe oder als konzentrisch zur Achse 23 gebogene Flex-Hülse ausgebildet und stationär auf der Außenmantelfläche 21 des Einbaugehäuses 22 oder umlaufend in der stirnseitigen Aufweitung des Hohlwellentopfes 19 festgelegt sein, mit gegenüberliegend dementsprechend radial oder axial orientiert gehalterten Kontaktbürsten.

Für die Montage braucht die Drossel-Klappe 12 mit ihrer integrierten, wenigstens über einen Teil-ihrer axialen Länge zum Topf aufgeweiteten Welle 13 nur durch die Öffnung 25 in einer Kanal-Seitenwand 16 hindurch radial in den Kanalquerschnitt eingeführt und mit ihrem Lager-Zapfen 17 in die gegenüberliegende Wand 18 eingesteckt zu werden, woraufhin das mit dem Getriebemotor 14-15 vorbestückte Einbaugehäuse 22 als zweiter Lagerzapfen in den Wellen-Topf 19 axial eingeführt werden kann, womit zugleich die Montage-Öffnung 25 vom Gehäuse-Kragen 24 des Motors 14 verschlossen wird. Zweckmäßiger noch werden die Klappe 21 mit ihrer wenigstens teilweise hohlen Welle 13 und der Getriebemotor 14-15 in seinem Einbaugehäuse 22 zu einer einzigen handhabbaren Baugruppe extern vormontiert, wie in der Zeichnung beispielshalber durch den Eingriff der Radiallager-Rippe 20 in eine Einschnappnut an der Außenmantelfläche des Gehäuses 22 veranschaulicht, der dann zugleich der axialen Fixierung der Welle 13 in Richtung entgegengesetzt zur Lagerung des Zapfens 17 dienen kann.

Die aus dem Lagerschild des Motors 14 vorstehenden Kontaktfahnen 35 für die elektrische Speisung des Motors 14 sind dort für die Anschlußverkabelung in der Gehäuse-Einbauöffnung 34 gut zugänglich. Diese kann durch einen bevorzugt einfach kraftschlüssig einzusetzenden, stopfenförmigen oder flach-topfförmigen Deckel 36, vorzugsweise mit integriertem Steckerkorb ausgerüstet, verschlossen werden. Zum Anpassen an hinsichtlich der Lage der Kontaktfahnen 35 unterschiedliche Motore 14 braucht dann nur der Deckel 36 mit anderem Steckerkorb ausgerüstet zu werden. Der wird zweckmäßigerweise zugleich für elektrische Zugänglichkeit zum Dreh-Winkelgeber 33 ausgelegt, so daß für dessen Anschluß an die Steuerungsperipherie keine gesonderten Kontaktmittel angebracht werden müssen.

## Patentansprüche

1. Motorisch betätigbare Klappe (12), insbesondere zur Beeinflussung des Querschnittes eines Fluid-Kanals (11), die mit einer über wenigstens einen Teil ihrer axialen Länge hohlen Welle (13) ausgestattet ist, in der ein Motor (14) zum Verdrehen der mit der Klappe (12) bestückten Welle (13) angeordnet ist, **dadurch gekennzeichnet, daß** die hohle Welle (13) Teil des Abtriebsrades (31) eines in ihr angeordneten, vom Motor (14) angetriebenen Untersetzungs-Getriebes (15) ist.

2. Klappe nach Anspruch 1, **dadurch gekennzeichnet, daß** einerseits die mit ihr integrale Welle (13) und andererseits ein Einbau-Gehäuse (22) für Motor (14) und Untersetzungs-Getriebe (15) im Kunststoff-Spritzguß erstellt sind.

3. Klappe nach Anspruch 1 oder 2, **dadurch gekennzeichnet, daß** die Welle (13) tulpenförmig aus einem massiven Bereich kleinen Durchmessers und axial daran anschließend aus einem sacklochartig geöffneten Topf (19) dagegen wesentlich größeren Durchmessers besteht.

4. Klappe nach einem der vorangehenden Ansprüche, **dadurch gekennzeichnet, daß** die Welle (13) einerseits mit einem Zapfen (17) in einer Seitenwand (18) des Kanales (11) und gegenüberliegend mit zu einem Topf (19) aufgeweiteten Ende auf einem zur Klappen-Welle (13) koaxialen Einbau-Gehäuse (22) für den Getriebemotor (14-15) gelagert ist, das ihrerseits an der gegenüberliegenden Seitenwand (16) des Kanales (11) gehaltert ist.

5. Klappe nach dem vorangehenden Anspruch, **dadurch gekennzeichnet, daß** der Motor (14) in einem Einbau-Gehäuse (22) gehaltert und dieses mittels eines umlaufenden Kragens (24) unter Verschluß einer Montage-Öffnung (25) in der Seitenwand (16) des Kanales (11) gehaltert ist.

6. Klappe nach einem der vorangehenden Ansprüche, **dadurch gekennzeichnet, daß** eine Rastverbindung zwischen dem mit dem Getriebemotor (14-15) bestückten Einbaugehäuse (22) und der mit dem so komplettierten Gehäuse (22) bestückten Klappen-Welle (13) vorgesehen ist.

7. Klappe nach einem der vorangehenden Ansprüche, **dadurch gekennzeichnet, daß** der Getriebemotor (14-15) in axialer Verlängerung des Motors (14) mit einem Well-Getriebe (15) ausgestattet ist, dessen Stößelrad (28) über einen Umfangsteil der Verzahnung seines Flexbandes (29) außer mit dem wellenfesten Abtriebsrad (31) auch mit einem axial dagegen versetzten Stützrad (30) in Eingriff steht, das koaxial zur Welle (27) des im Einbau-Gehäuse (22) gehalterten Motors (14) am Gehäuse (22) vorgesehen ist.

8. Klappe nach einem der vorangehenden Ansprüche, **dadurch gekennzeichnet, daß** zwischen dem Motor (14) und der topfförmigen Aufweitung der Klappen-Welle (13) ein digital oder analog arbeitender Dreh-Winkelgeber (33) angeordnet ist.

9. Klappe nach dem vorangehenden Anspruch, **dadurch gekennzeichnet, daß** die Mantelfläche des Einbau-Gehäuses (22) und / oder des Wellen-Topfes (19) das Substrat für elektrisch leitende Geber-Strukturen ist oder trägt.

10. Klappe nach einem der vorangehenden Ansprüche, **dadurch gekennzeichnet, daß** sie im Luft-Kanal (11) einer Kraftfahrzeug-Klimaanlage angeordnet ist.

## Claims

1. A motor-actuable valve (12), in particular for influencing the cross section of a fluid duct (11), which is equipped with a shaft (13) which is hollow over at least part of its axial length and in which is arranged a motor (14) for rotating the shaft (13) equipped with the valve (12), **characterized in that** the hollow shaft (13) is part of the output wheel (31) of a reduction gear (15) arranged in said hollow shaft and driven by the motor (14).

2. The valve as claimed in claim 1, **characterized in that**, on the one hand, the shaft (13) integral with it and, on the other hand, an installation housing (22) for the motor (14) and reduction gear (15) are produced by plastic injection molding.

3. The valve as claimed in claim 1 or 2, **characterized in that** the shaft (13) consists in a tulip-shaped manner of a solid region of small diameter and, following the latter axially, of a bowl (19) opened in the manner of a blind hole, but of substantially larger diameter.

4. The valve as claimed in one of the preceding claims, **characterized in that** the shaft (13) is mounted, on the one hand, by means of a journal (17) in a side wall (18) of the duct (11) and opposite, with an end widened toward a bowl (19) on an installation housing (22), coaxial to the valve shaft (13), for the geared motor (14-15) which is itself held on the opposite side wall (16) of the duct (11).

5. The valve as claimed in the preceding claim, **characterized in that** the motor (14) is held in an installation housing (22) and the latter is held in the side wall (16) of the duct (11) by means of a continuous collar (24), with an assembly orifice (25) being closed.

6. The valve as claimed in one of the preceding claims, **characterized in that** a latching connection is provided between the installation housing (22) equipped with the geared motor (14-15) and the valve shaft (13) equipped with the thus completed housing (22).

7. The valve as claimed in one of the preceding claims, **characterized in that** the geared motor (14-15) is equipped in the axial extension of the motor (14) with.a wave gear (15), the tappet wheel (28) of which is in engagement over a circumferential part of the toothing of its flexible band (29) not only with the output wheel (31) fixed with respect to the shaft, but also with a supporting wheel (30) which is offset axially relative to said output wheel and, which is provided on the housing (22) coaxially to the shaft (27) of the motor (14) held in the installation housing (22).

8. The valve as claimed in one of the preceding claims, **characterized in that** a digital- or analogue-operating rotary-angle encoder (33) is arranged between the motor (14) and the bowl-shaped widening of the valve shaft (13).

9. The valve as claimed in the preceding claim, **characterized in that** the surface area of the installation housing (22) and/or of the shaft bowl (19) is or carries the substrate for electrically conductive encoder structures.

10. The valve as claimed in one of the preceding claims, **characterized in that** it is arranged in the air duct (11) of a motor vehicle air-conditioning system.

## Revendications

1. Clapet (12) actionné par moteur, en particulier pour agir sur la section transversale d'un canal à fluide (11), qui est équipé d'un arbre (13) creux sur au moins une partie de sa longueur axiale, dans lequel est disposé un moteur (14) pour faire tourner l'arbre (13) équipé du clapet (12), **caractérisé en ce que** l'arbre creux (13) fait partie du pignon mené (31) d'un démultiplicateur (15) disposé sur celui-ci et entraîné par le moteur (14).

2. Clapet selon la revendication 1, **caractérisé en ce que** sont réalisés par moulage par injection de matière plastique d'une part l'arbre (13) intégré au clapet et d'autre part un carter de montage (22) pour le moteur (14) et le démultiplicateur (15).

3. Clapet selon la revendication 1 ou 2, **caractérisé en ce que** l'arbre (13), en forme de trompette, est constitué d'une zone massive de petit diamètre et, se raccordant axialement à celle-ci, d'un pot (19) ouvert de type trou borgne de diamètre en revanche sensiblement supérieur.

4. Clapet selon l'une des revendications précédentes, **caractérisé en ce que** l'arbre (13) est monté, d'une part par un tourillon (17), dans une paroi latérale (18) du canal (11) et, en vis-à-vis, par une extrémité élargie en un pot (19), sur un carter de montage (22) coaxial à l'arbre à clapet (13) pour le motoréducteur (14-15) qui, de son côté, est maintenu sur la paroi latérale (16) opposée du canal (11).

5. Clapet selon la revendication précédente, **caractérisé en ce que** le moteur (14) est maintenu dans un carter de montage (22) et ce dernier est maintenu, au moyen d'une collerette (24) périphérique, dans la paroi latérale (16) du canal (11) en fermant une ouverture de montage (25).

6. Clapet selon l'une des revendications précédentes, **caractérisé en ce qu'**il est prévu une liaison à encliquetage entre le carter de montage (22) équipé du motoréducteur (14-15) et l'arbre à clapet (13) équipé du carter (22) ainsi complété.

7. Clapet selon l'une des revendications précédentes, **caractérisé en ce que** le motoréducteur (14-15) est équipé, dans le prolongement axial du moteur (14), d'une transmission à arbre (15) dont la roue de poussoir (28) est en prise sur une partie du pourtour de la denture de sa bande flexible (29), non seulement avec la roue menée (31) solidaire de l'arbre, mais aussi avec une roue d'appui (30) décalée axialement par rapport à celle-ci, laquelle est prévue sur le carter (22) coaxialement à l'arbre du moteur (14) maintenu dans le carter de montage (22).

8. Clapet selon l'une des revendications précédentes, **caractérisé en ce qu'**un capteur d'angle de rotation (33), fonctionnant de manière numérique ou analogique, est prévu entre le moteur (14) et l'élargissement en forme de pot de l'arbre à clapet (13).

9. Clapet selon la revendication précédente, **caractérisé en ce que** la surface d'enveloppe du carter de montage (22) et/ou du pot (19) de l'arbre est ou porte le substrat pour des structures de capteur électriquement conductrices.

10. Clapet selon l'une des revendications précédentes, **caractérisé en ce qu'**il est disposé dans le canal à air (11) d'un système de climatisation d'un véhicule automobile.
